# EUROPEAN PATENT APPLICATION

(11) **EP 4 517 125 A1**
(43) Date of publication of application: **05.03.2025**
(21) Application number: 23194236.8
(22) Date of filing: 30.08.2023
(51) Int. Cl.: F16D 55/02, F16D 55/36, F16D 65/853, F16D 61/00

(54) **AUTOMOTIVE FRICTION BRAKE SYSTEM**

(71) Applicant: Continental Automotive Technologies GmbH, 30175 Hannover (DE)
(72) Inventor: Pla, Sébastien, 60488 Frankfurt am Main (DE); Schulitz, Matthias, 60488 Frankfurt am Main (DE)
(74) Representative: Continental Corporation

(57) **Abstract**

An automotive friction brake system (3) for a motor vehicle (1) has a cooling zone (17) with a liquid cooling medium (16) for a fin pack (8) and a reserve zone (18) for storing the cooling medium (16) when the friction brake system is not used (3). The cooling zone (17) and the reserve zone (18) are arranged in the same housing (6) and separated from each other by an indentation (14). When the motor vehicle (1) brakes, the cooling medium (16) sloshes into the cooling zone (17) and cools the fin pack (8). When the motor vehicle (1) accelerates, the cooling medium (16) sloshes into the reserve zone (18) and reduces a residual torque on the fin pack (8).

## Description

The invention relates to an automotive friction brake system for a motor vehicle comprising a brake stator, comprising a brake rotor that is essentially rotatable in regard to the stator, with an actuating device for friction brake apply under requested automotive service brake or parking brake function including their release functions that can be linked with generating or releasing a frictional flow of brake force between the stator and the rotor, and with a cooling device having a liquid cooling medium for dissipating heat under frictional flow of force generated between the rotor and the stator.

Such a friction brake device can for example be designed as a multi-disc brake which is known for example from DE 10 2019 208 226 B3. A housing of this braking device is designed to be open to a gearbox of the motor vehicle. Since the vehicle transmission in motor vehicles has oil lubrication anyway, the oil of the transmission can be used to cool the multi-disc brake.

In the case of friction brake systems for motor vehicles, when braking, it is necessary to compensate, dissipate and/or serve for energy regeneration for heat that is generated by the frictional flow of brake force between the rotor and stator. For this purpose, the cooling device requires a sufficient amount of cooling medium, such as oil. After releasing the brake, however, the frictional torque between the rotor and stator should be particularly low. In this case, the cooling medium between the rotor and the stator leads to an interfering residual torque.

The invention is based on the problem of further forming a braking device of the type mentioned at the beginning in such a way that it has sufficient cooling during braking and a particularly low residual torque between rotor and stator after braking.

According to the invention, this problem is solved by the fact that the stator has a cooling zone that at least partially accommodates the rotor and a reserve zone allocated in distance therefrom away from the rotor and reserve zone, and that the cooling zone automatically receives and absorbs say accumulates automatically more cooling medium volume when in friction brake apply function in compare to situation when during friction brake release function. The present invention allows in the end of the day for the wholly new, reliable and energy efficient tech-improvement that, for example, permanent natural gravity in vertical direction and in the vehicular motion direction the motion directed component of inertial fluid reaction in a driven vehicle are implemented and exploited for free as the currentless natural driver in essential exchange, conveying (pumping) and/or (re)circulation of cooling fluid volumes.

Due to this design, the cooling zone is filled with the cooling medium to such an extent that the heat generated during friction brake apply can be reliably absorbed (accumulated) by increased volume of fresh cooling medium. When the friction brake is released, the additive cooling medium volume is at least partially removed from previous scenery, rotor etc. and therefore reduces a residual torque between the rotor and stator. When the friction brake force is released, the cooling medium removed from the cooling zone is stored in the reserve zone using natural gravity. A small residual amount of cooling medium in the cooling zone allows residual heat to be dissipated in time after the power flow has been generated. The fluidic cooling medium is preferably oil but other fluid election still possible.

According to another advantageous further development of the invention, the filling of the cooling zone and the reserve zone is structurally particularly simple if the cooling zone is arranged in the intended direction of travel of the motor vehicle in front of the reserve zone. Acceleration and braking movements of the motor vehicle lead to a distribution of the liquid cooling medium, so that the inertia of the cooling medium fills the reserve zone during acceleration and the cooling zone during braking. The distribution of the cooling medium is therefore carried out by sloshing movements. Thanks to the invention, no pump or the like is necessary for the distribution of the cooling medium.

When driving downhill the motor vehicle equipped with the braking device, there is a higher cooling requirement of the braking device than when driving on the flat. When driving uphill, however, the braking device is only used a little, so that a disturbing residual torque between the rotor and stator can be avoided. The desired distribution and fluid volume drive of the refrigerant between the cooling zone and the reserve zone performs automatically and without necessity or use of electric or other stored automotive board energy of the vehicle. With this the invention allows for automatic currentless circulation that is controlled simply by gravity and/or inertial fluid reaction. Height of zones in vehicle can be designed different so that one is allocated above the other. For example the cooling zone can be above the reserve zone or vice versa. However the invention can still perform according to another advantageous elaboration of the invention if, in the intended installation position of the cooling device in the motor vehicle, the cooling zone and the reserve zone can be both arranged at the same (equal) height (provided that the friction brake system/vehicle is essentially on flat, noninclined, underground).

According to another advantageous further development of the invention, the spatial arrangement of the cooling zone and the reserve zone is particularly simple in terms of design if the stator has a housing and if the housing has the cooling zone and the reserve zone.

To further simplify the design of the cooling device, it contributes to the further simplification of the design of the cooling device, according to another advantageous further development of the invention, if the cooling zone and the reserve zone are separated from each other by a separating element.

The enclosure could be divided into several chambers separating the reserve zone and the cooling zone, or it could have different enclosure parts. To further simplify the design of the stator, it contributes according to another advantageous further development of the invention if the cooling zone and the reserve zone are each designed as bulges of the housing. Such bulges can be easily incorporated into the housing using the deep-drawing process. Alternatively, the separating element can also be designed as a central indentation of the housing, so that the two bulges are created at the ends of the housing.

According to another advantageous elaboration of the invention, the distribution of the cooling medium can be easily controlled if the cooling zone and the reserve zone are connected by a channel. This design also allows the reserve zone in the motor vehicle to be freely arranged.

The control of the distribution of the refrigerant is particularly simple, according to another advantageous elaboration of the invention, if a damper or valve is arranged between the cooling zone and the reserve zone.

According to another advantageous further development of the invention, a large-area contact of the cooling medium with heat-generating components can be easily achieved if the braking device is designed as a multi-disc brake with alternately arranged axially movable pad discs and intermediate discs of a disc pack, wherein the lining discs are torsionally connected to the rotor or stator and the intermediate discs are torsionally connected to the opposite component of the stator or rotor if the control has means of clamping the lamellar pack to generate a flow of force and to release the tension of the lamellar pack and to release the flow of force and if the cooling zone comprises at least a part of the lamellar pack and the reserve zone is located outside the lamellar pack.

The invention permits numerous embodiments. To further clarify its basic principle, one of them is shown in the drawing and is described below. This shows in
Fig.1 schematically a motor vehicle with a braking device,
Fig.2 the longitudinal section of the braking device
Fig.3 schematically shows the braking device from Figure 2 in cross-section along lines III - III at rest,
Fig.4 the braking device from Figure 3 during a brake
Fig.5 the braking device from Figure 3 after acceleration
Fig.6 shows another embodiment of the braking device in cross-section.

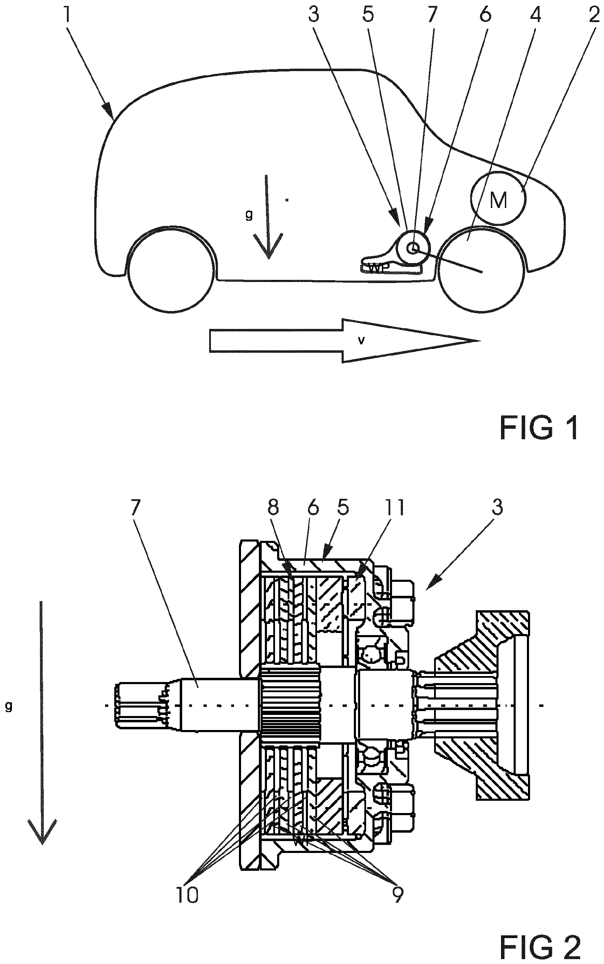

Figure 1 schematically shows a motor vehicle 1 with an engine 2 and a braking device 3 for wheels 4. The braking device 3 has a stator 5 with a housing 6 and a rotor 7 connected to at least one of the wheels 4. The rotor 7 is located near one end of housing 6 in the direction of travel of the motor vehicle. For clarification, the direction of travel of motor vehicle 1 is marked with an arrow.

Figure 2 schematically shows the longitudinal section of the braking device 3 for motor vehicles from Figure 1. The braking device 3 is designed as a multi-disc brake and has a multi-disc package 8 with alternately arranged axially movable pad discs 9 and intermediate discs 10. The lining discs 9 are torsion-resistant to the rotor 7 and the intermediate discs 10 are torsion-resistant to the stator 5. An actuating device 11 designed as a spreading device is supported on the stator 5. By spreading the spreading device by means of an actuator not shown, the fin package 8 is clamped and thus a flow of force from the rotor 7 to the stator 5 is generated. Springs not shown release the tension of the lamellar pack 8 and thus the flow of force. For example, the control 11 may be electric or hydraulic.

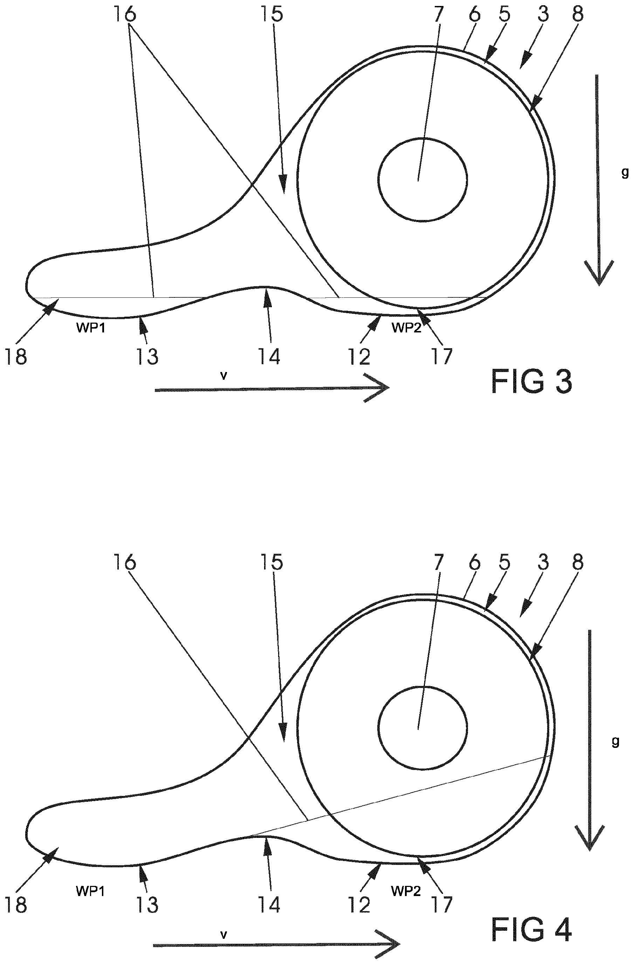

Figure 3 schematically shows a cross-section through the braking device 3 from Figure 2 along lines III - III. The package 6 of the stator 5 encloses the fin package 8 in a first bulge 12 and has a second bulge 13 distant from the fin package 8. The bulges 12, 13 are arranged in the bottom area of the housing 6 and are separated from each other by means of a separating element designed as an indentation 14. The indentation 14 removed from the lamella package 7 is arranged in the intended installation position against the direction of travel of motor vehicle 1 shown in Figure 1.

The braking device 3 has a cooling device 15 for the fin pack 8 with liquid cooling medium 16 located in the housing 6. The sub-area with the first bulge 12 of housing 6 comprising the disc package 8 with the first bulge 12 forms a cooling zone 17 of the braking device 3. The part of the housing 6 with the second bulge 13 removed from the fin package 8 forms a reserve zone 18. In the reserve zone 18 there is cooling medium 16, which has no contact with the fin package 8 in the idle state shown. Cooling medium 16 located in cooling zone 17 is in contact with the fin package 8 and allows it to be cooled. The cooling zone 17 and the reserve zone 18 are arranged at the same height and contain about the same amount of cooling medium 16 in the idle state shown, which corresponds, for example, to the new state.

When the motor vehicle 1 with braking device 3 brakes, the cooling medium 16 of reserve zone 18 sloshes into cooling zone 17, as shown in Figure 4. This sloshing movement is due to the fact that cooling zone 17 is located in the direction of travel of motor vehicle 1 in front of reserve zone 18. It can be seen that the fin package 8 is particularly deeply immersed in the cooling medium 16 and thus has large contact surfaces with the cooling medium 16. This leads to a particularly reliable cooling of the disc pack 8 during braking.

The filling of cooling zone 17 with cooling medium 16 shown in Figure 4 also occurs when motor vehicle 1 is driving downhill. During such a downhill journey, the braking device 3 of motor vehicle 1 is usually subjected to particularly heavy loads. Due to the shape and orientation of housing 6, the braking device 3 is also cooled particularly reliably during this downhill ride, because the fin pack 8 is immersed deep into the cooling medium 16.

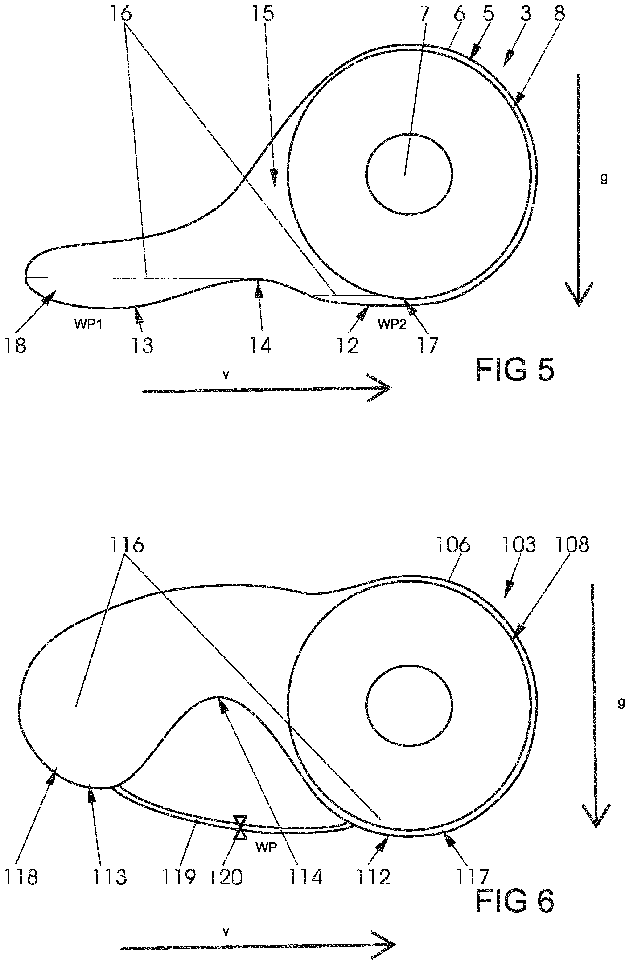

Figure 5 shows the distribution of the refrigerant 16 in the cooling zone 17 and in the reserve zone 18 after a strong acceleration of the motor vehicle 1. In this case, a large part of the cooling medium 16 sloshes out of the cooling zone 17 into the reserve zone 18 due to its mass inertia. This means that there is very little cooling medium in cooling zone 17 that can dissipate residual heat from the fin package 8. However, the small amount of cooling medium 16 in the area of the fin package 8 also leads to only a small residual torque in the fin package 8, so that friction losses of the friction brake system 3 are particularly low.

Figure 6 shows another embodiment of a braking device 103, which differs from that shown in Figure 3 in that a reserve zone 118 and a cooling zone 117 enclosing a fin pack 108 are connected to each other by a channel 119. In channel 119, a check valve or valve 120 is arranged, which controls a distribution of cooling medium 116 between the cooling zone 117 and the reserve zone 118. The check valve or valve 120 thus forms a separating element between cooling zone 117 and reserve zone 118. The cooling zone 117 and the reserve zone 118 are formed as bulges 112, 113 of a casing 106, wherein the bulges 112, 113 are separated from each other by an indentation 114. Otherwise, this braking device 103 is constructed in the same way as the one from Figure 3.

Additionally and especially in accomplishing the effectively closed energy circle, any embodiment of the explained friction brake system can be provided with a heat pump system HP, HP 1, HP2 that allows for regenerative green capabilities in terms of reliable, eco-friendly and thereby productive cooling fluid energy conversion. Consequently any heat that is stored for friction brake reasons in a cooling fluid can usefully be converted and made available for its electric use in automotive electric energy network of a vehicle.

### Reference list

1 motor vehicle
2 engine
3, 103 friction brake system
4 wheel
5 stator
6, 106 cases
7 rotor
8, 108 lamellar pack
9 pad disc
10 intermediate disc
11 control device
12, 112, 13, 113 bulge
14 indentation
15 cooling device
16, 116 cooling medium
17, 117 cooling zone
18, 118 reserve zone
119 channel
120 valve
g gravitational force (direction)
HP, HP1, HP2 Heat Pump
M Motor/Drivetrain (of vehicle)
v Motion direction (of vehicle)

## Claims

1. Automotive friction brake system (3, 103) for a motor vehicle (1) with a stator (5), with a rotor (7) which can be rotated relative to the stator (5), with an actuating device (11) for friction brake apply or friction brake release thereby affecting frictional condition between the stator (5) and the rotor (7) and with a cooling device (15) comprising a liquid cooling medium (16, 116) for dissipating heat in friction brake apply, **characterized by** the fact that the stator (5) comprises a cooling zone (17, 117) that at least partially accommodates the rotor (7) and the stator (5) comprising a reserve zone (18, 118) in distance from the rotor (7) and the cooling zone (17, 117), and wherein the cooling zone (17, 117) absorbs more cooling medium (16, 116) during friction brake apply than during friction brake release.

2. Automotive friction brake system (3, 103) according to claim 1, **characterized in that** the cooling zone (17, 117) is arranged in the intended direction of travel of the motor vehicle in front of the reserve zone (18, 118).

3. Automotive friction brake system (3, 103) according to claim 1 or 2, **characterized in that** in the intended installation position of the cooling device (15) in the motor vehicle (1) the cooling zone (17, 117) and the reserve zone (18, 118) are arranged at the same height.

4. Automotive friction brake system (3, 103) according to at least one of claims 1 to 3, **characterized in that** the stator (5) has a housing (6, 106) and that the housing (6, 106) has the cooling zone (17, 117) and the reserve zone (18, 118).

5. Automotive friction brake system (3, 103) according to at least one of claims 1 to 4, **characterized in that** the cooling zone (17, 117) and the reserve zone (18, 118) are separated from each other by a separating element.

6. Automotive friction brake system (3, 103) according to at least one of claims 1 to 5, **characterized in that** the cooling zone (17, 117) and the reserve zone (18,118) are both compartments.

7. Automotive friction brake system (3, 103) according to at least one of claims 4 to 6, **characterized in that** the cooling zone (17, 117) and the reserve zone (18, 118) are each formed as bulges (12, 112, 13, 113) of the housing (6, 106).

8. Automotive friction brake system (3, 103) according to at least one of claims 1 to 7, **characterized in that** the cooling zone (117) and the reserve zone (118) are connected to each other by a channel (119).

9. Automotive friction brake system (3, 103) according to at least one of claims 1 to 8, **characterized in that** a flap or valve (120) is arranged between the cooling zone (17) and the reserve zone (118).

10. Automotive friction brake system (3, 103) and/or friction brake fluid cooling process according to at least one of claims 1 - 9, **characterized in that** natural gravity force (g) constitutes currentless constant energy driver for automatic collection, backfeed, recirculation, equalization or fluid level niveau concerning liquid cooling medium and/or automatic storing liquid cooling medium in at least one zone (17,117;18,118).

11. Automotive friction brake system (3, 103) and/or friction brake fluid cooling process according to at least one of claims 1 - 10, **characterized in that** fluidic inertial reaction force constitutes the currentless energy driver for automatic zone change of fluidic cooling medium volume, especially in the direction of vehicular forward motion (v) when leaving from reserve zone (18,118) into cooling zone (17,117).

12. Automotive friction brake system (3, 103) according to at least one of claims 1 to 11, **characterized in that** the friction brake system (3, 103) is designed as a multiplate brake with alternately arranged axially movable pad discs (9) and intermediate discs (10) of a multi-disc pack (8, 108), wherein the lining discs (9) are torsionally connected to the rotor (7) or the stator (5) and the intermediate discs (10) are torsionally connected to the opposite component of the stator (5) or the rotor (7), that the control (11) has means for clamping the fin pack (8) to generate a frictional flow of force and to release the tension of the fin pack (8, 108) and for releasing the frictional flow of force, and that the cooling zone (17, 117) comprises at least part of the fin pack (8, 108) and that the reserve zone (18, 118) is located outside the fin pack (8, 108).

13. Automotive friction brake system (3,103) according to anyone of claims 1-12, **characterized in that** at least one or more heat pump system (HP, HP1, HP2) are included in the friction brake system which heat pump system (HP,HP1 ,HP2) is preferably either integrated in the cooling fluid circulation itself and/or in any one of the zones (17,117;18,118) of stator (5), and wherein the at least one heat pump system (HP, HP1, HP2) serves for friction brake energy regeneration so that cooling fluid heat energy is converted into electric energy.
